# EUROPÄISCHE PATENTSCHRIFT

(11) **EP 3 358 332 B1**
(45) Veröffentlichungstag und Bekanntmachung des Hinweises auf die Patenterteilung: **15.07.2020**
(21) Anmeldenummer: 18154730.8
(22) Anmeldetag: 01.02.2018
(51) Int. Cl.: G01M 13/00, G01M 5/00, G01M 13/04

(54) **Verfahren zur Bestimmung des Beginns einer verschleißbedingten Bauteil-Restnutzungsdauer eines elastisch verformbaren Bauteils, als Strukturteil und/oder Lagerteil eines Geräts.**
Method for determining the beginning of a wear-related remaining service life of an elastically deformable component, as a structural part and/or bearing part of a device.
Procédé de détermination de début d'une vie utile résiduelle en fonction d'un composant à déformation élastique comme une pièce structurelle et/ou pièce de support d'un appareil

(30) Priorität: 02.02.2017 DE 102017000925
(43) Veröffentlichungstag der Anmeldung: 08.08.2018
(73) Patentinhaber: Jörn GmbH, 71336 Waiblingen (DE)
(72) Erfinder: Reinke, Kai, 71686 Remseck (DE); Bender, Amelie, 33102 Paderborn (DE); Meyer, Tobias, 28359 Bremen (DE); Sextro, Walter, 33102 Paderborn (DE); Kimotho, James Kuria, Nairobi (KE)
(74) Vertreter: Liebl, Thomas

(56) Entgegenhaltungen:
- EP-A1- 3 144 658
- WO-A2-01/20299
- JP-A- H11 247 951

## Beschreibung

Die Erfindung betrifft ein Verfahren zur Bestimmung des Beginns einer verschleißbedingten Bauteil-Restnutzungsdauer eines elastisch verformbaren Bauteils als Strukturteil und/oder Lagerteil eines Geräts.

Es handelt sich hier um Geräte, bei denen auf elastisch verformbare Bauteile als Strukturteile und/oder Lagerteile, insbesondere auf Gummi-Metall-Lager, im Betrieb abhängig von wechselnden Betriebszuständen unterschiedliche Verformungskräfte einwirken, die letztendlich zu einem die Bauteilnutzungsdauer begrenzenden Bauteilverschleiß führen.

Der Begriff "Gerät" ist hier allgemein zu verstehen und weit auszulegen, wobei ortsfeste Maschinen ebenso wie Fahrzeuge umfasst sein sollen, die betriebsbedingt externen Kräften ausgesetzt sind und/oder selbst Kräfte erzeugen, die zu den Bauteil-Verformungen führen.

Auch der Begriff "Gummi-Metall-Lager" ist, wie in Fachkreisen üblich, allgemein zu verstehen und weit auszulegen, wobei unter "Gummi" auch allgemein ein "Elastomermaterial" und unter "Metall" auch allgemein ein verformungssteifes Lagerbauteil insbesondere auch als ein verformungssteifes Lagerbauteil aus Kunststoff verstanden werden kann.

Elastisch verformbare Bauteile solcher Geräte können insbesondere Elastomerlager, insbesondere Gummi-Metall-Lager und/oder gegebenenfalls auch Kunststoffteile, insbesondere Faserverbundteile sein. Bekanntlich sind solche Bauteile bei richtiger Auslegung über eine lange Nutzungsdauer auch bei hohen oszillierenden Belastungen funktionssicher und im Prinzip verschleißfrei. Ein Kriterium für die Funktion eines solchen Bauteils ist die Größe einer rückstellenden Verformung bei einer bestimmten Krafteinwirkung bzw. die entsprechende Bauteilsteifigkeit.

An Muster-Bauteilen solcher Geräte und/oder an Kontroll-Bauteilen einer Serie wird in bekannter Weise die Bauteilnutzungsdauer auf einem Prüfstand bei klar definierten Verhältnissen gemessen. Dazu wird beispielsweise ein Gummi-Metall-Lager mit oszillierenden Belastungen beaufschlagt. Es werden die Lastwechsel oder sich wiederholende Lastblöcke gezählt und dabei werden sowohl die Kraft als auch die zugeordnete Verformung gemessen, wobei einer der beiden Werte vorgegeben wird. Daraus wird ein Diagramm als Messkurve erzeugt, in dem eine abfallende Steifigkeit über die Zahl der Lastwechsel erkennbar ist. Die Zahl der Lastwechsel ist unmittelbar als Nutzungsdauer interpretierbar. Aus einem solchen Diagramm ist jeweils im Laufe der Nutzungsdauer eine Zunahme der Verformung entsprechend einem Abfall der Steifigkeit in charakteristischen drei Stufen erkennbar. In der ersten Stufe fällt die Steifigkeit sehr schnell, beispielsweise um zirka 30% ab, was als Fließen und Setzen bezeichnet wird. Anschließend wird über eine vergleichsweise sehr lange Nutzungsdauer nur ein sehr geringer Abfall der Steifigkeit gemessen entsprechend einem Plateauverlauf mit linearem und/oder leichtem Abfall der Steifigkeit. Daran schließt sich ein messbarer vergleichsweise zügiger progressiver Abfall der Steifigkeit an, welcher ein nahes verschleißbedingtes Ende der Bauteilfunktion mit einem möglichen Ausfall und damit ein Ende der Nutzungsdauer markiert.

Der Grund für dieses mit dem Prüfstand messbare Verhalten insbesondere eines Gummi-Metall-Lagers liegt darin, dass bei dauernden hohen oszillierenden Belastungen durch aufgezwungene Verformungen Molekülketten im Gummi aufreißen, die sich dann wegen der anliegenden Wechsellasten nicht mehr regenerieren können. Insbesondere in der dritten Stufe potenzieren sich diese Vorgänge und es kommt auch zu optisch erkennbaren Rissen und Schäden, die mit einem schnellen Abfall der Bauteilsteifigkeit zu einem beginnenden Ende der Nutzungsfunktion und letztendlich zu einem Ausfall führen. Ausgehend von Messungen der Nutzungsdauer an Muster-Bauteilen auf einem Prüfstand wird dann mit Sicherheitsabschlägen für fertigungsbedingte Toleranzen und differierende reale Bauteilbelastungen eine Nutzungsdauer für Serienteile im Einbauzustand abgeschätzt und angegeben. Übliche typische Nutzungsdauern entsprechend der ersten und zweiten Stufe des oben genannten Diagramms liegen in der Größenordnung von 6 bis 10 Jahren. Wenn die dritte Diagrammstufe als Beginn einer vorgebbaren Bauteil-Restnutzungsdauer erreicht ist, muss zwar ein Gummi-Metall-Lager zeitnah ausgetauscht werden, kann aber noch über mehrere Wochen, gegebenenfalls Monate bis zu einem Totalausfall weiter verwendet werden.

Ähnlich dem vorstehend in Verbindung mit einem Gummi-Metall-Lager erläuterten Steifigkeitsverlauf verhält sich bei entsprechenden Belastungen üblicherweise auch der Steifigkeitsverlust eines Kunststoffteils, insbesondere eines Faserverbundbauteils, bei dem sich durch oszillierende Belastungen und erzwungene Verformungen der Faserverbund lockert und auflöst.

Bei vielen Anwendungen solcher Bauteile kann das beginnende Ende der Nutzungsdauer entsprechend dem Eintritt in die dritte Diagrammstufe relativ einfach erkannt werden, beispielsweise durch eine veränderte Geräuschentwicklung oder bei einem Fahrzeug durch ein verändertes Fahrverhalten. Bei leicht zugänglichen Einbausituationen kann eine beginnende Schädigung entsprechend der dritten Diagrammstufe gegebenenfalls auch optisch, beispielsweise an Rissbildungen, erkannt werden.

Es gibt aber auch zahlreiche Anwendungen, bei denen eine stark nachlassende Steifigkeit eines solchen Bauteils für einen Nutzer eines Geräts, beispielsweise eines Fahrzeugs oder einer Maschine nicht spürbar ist und die ausfallkritischen Bauteile so verbaut sind, dass eine optische Kontrolle nicht möglich ist. Ein Bauteilschaden kann dann zu einem Sicherheitsrisiko oder zu teuren Folgeschäden und Betriebsausfällen führen. Beispielsweise finden sich solche Einbausituationen bei Wagons und Lokomotiven von Zügen, bei Fluggeräten, Windenergieanlagen und Schiffen. Gerade für solche Einsatzfälle werden bisher relevante Muster-Bauteile im Vorfeld an Prüfständen getestet und mit gemessenen Belastungsdaten eine maximale Laufzeit abgeschätzt und festgelegt, nach der sie unter Berücksichtigung einer normalen Streuung und mit großen Sicherheitsabschlägen, meist lange vor einer möglichen Lebensdauer getauscht werden, lange bevor eine Schädigung für einen zwingenden Austausch eingetreten ist.

Nachteilig muss für einen solchen, durch eine Lebensdauerabschätzung an Musterbauteilen bedingten, präventiven Tausch eines solchen elastisch verformbaren Bauteils in regelmäßigen Wartungsintervallen das Gerät, zum Beispiel ein Fahrzeug oder eine Maschine außer Betrieb gesetzt werden. Um ein Sicherheitsrisiko und Folgeschäden auszuschließen, muss ein Bauteiltausch deutlich vor einer im Mittel möglichen Nutzungsdauer erfolgen. Dies führt zu hohen Ausfall-, Bauteil- und Wartungskosten, die noch nicht durch den aktuellen und noch funktionssicheren Bauteilzustand erforderlich wären. Da in einem Gerät regelmäßig mehrere solcher Bauteile, beispielsweise mehrere Gummi-Metall-Lager verbaut sind, vervielfachen sich die Kosten entsprechend.

Die vorstehend erläuterten, allgemein bekannten Lebensdauerabschätzungen anhand von prüfstandsvermessenen Musterbauteilen erfolgen insbesondere für Serienbauteile, beispielsweise für Gummi-Metall-Lager von Nutzfahrzeugen, da Messanordnungen, wie auf einem Prüfstand an allen verbauten und betriebsmäßig eingesetzten Serienbauteilen in der Regel nicht möglich sind und/oder zu aufwändig wären.

Es ist bereits ein Verfahren bei einer Geräteanordnung mit einem elastisch verformbaren, betriebsmäßig verbauten Bauteil bekannt (US 6,460,012 B1), wobei mit einer Einrichtung der Beginn einer verschleißbedingten Bauteil-Restnutzungsdauer unmittelbar am verbauten Bauteil festgestellt wird. Dazu werden, ähnlich wie auf einem Prüfstand, sowohl die betriebsmäßige Last auf das Bauteil als auch die der Last zugeordnete Verformung am Bauteil in seinem Einbauzustand gemessen. Mit diesen beiden gemessenen Werten kann eine Messkurve der Bauteilsteifigkeit entsprechend einer Prüfstands-Messkurve erzeugt werden, aus der eine Bauteil-Restnutzungsdauer abgeleitet werden kann. Eine solche Einrichtung mit einer Messanordnung zur Messung von Lastzuständen am Ort eines bereits verbauten Bauteils, insbesondere von betriebsabhängig wechselnden, unterschiedlichen Verformungskräften ist technisch komplex, aufwändig und kostenintensiv und somit wegen eines nicht vertretbaren Aufwands für einen Großteil von Bauteil-Einsätzen nicht möglich. Die zudem hier erforderliche, lastabhängige Messung der Verformung wäre insbesondere mittels Wegsensoren zwar vergleichsweise einfacher und weniger aufwändig. Eine genaue Messung der Verformung in allen Freiheitsgraden würde aber eine entsprechende Anzahl von mehreren, unterschiedlich justierten Sensoren erfordern, so dass auch eine genaue Verformungsmessung, relativ aufwändig wäre.

Weiter ist ein Verfahren bekannt (JP H11247951 A), mit dem bei einem bevorstehenden Ende einer Lebensdauer eines Zahnriemens, insbesondere bei einer Verwendung mit einer Brennkraftmaschine ein Warnsignal abgegeben wird. Dazu werden Temperaturmessungen des Zahnriemens jeweils ab Beginn einer Laufzeit während der Laufdauer durchgeführt und in einem zweistufigen Prozess mit zwei Kriterien dergestalt ausgewertet: Als erstes Kriterium wird beim Start der Laufzeit eine anfängliche Zahnriementemperatur gemessen und anschließend in vorbestimmten Zeitabständen jeweils durch weitere Temperaturmessungen ein Temperaturanstieg als Temperaturgradient bestimmt. Erst wenn dieser Temperaturanstieg einen vorgegebenen Grenzwert überschreitet, wird als zweites Kriterium eine Temperaturdifferenz zwischen der Zahnriementemperatur und einer Basistemperatur, insbesondere einer Umgebungstemperatur ermittelt und erst wenn diese Temperaturdifferenz einen weiteren vorgegebenen Grenzwert überschreitet wird ein Warnsignal abgegeben.

Aufgabe der Erfindung ist es, ein relativ einfaches und kostengünstiges Verfahren zur Bestimmung des Beginns einer verschleißbedingten Restnutzungsdauer eines in einem Gerät verbauten, elastisch verformbaren Bauteils als Strukturteil und/oder Lagerteil vorzuschlagen.

Diese Aufgabe wird mit den Merkmalen des Anspruchs 1 gelöst. Vorteilhafte Ausgestaltungen sind Gegenstand der darauf rückbezogenen Unteransprüche.

Gemäß Anspruch 1 wird ein sich zeitversetzt wiederholender jeweils gleicher Betriebszustand vorbestimmt, dem eine jeweils gleiche, periodisch wirkende Verformungskraft zugeordnet ist, durch die das elastisch verformbare Bauteilmaterial periodisch verformt wird. Dadurch wird durch Walkarbeit Energie in das elastisch verformbare Bauteilmaterial eingetragen, welches durch innere Reibung in Wärmeenergie umgesetzt wird, dergestalt, dass ein messbarer Temperaturanstieg im Vergleich zu einer Umgebungstemperatur erfolgt. Ein solcher Temperaturanstieg wird in einem ausgeglichenen Temperaturzustand bei jedem Messvorgang als Kenngröße verwendet, wobei im Verlauf einer Bauteilnutzungsdauer die Bauteilsteifigkeit abnimmt und damit im Verlauf einer Bauteilnutzungsdauer entsprechend ein gemessener Temperaturanstieg im Vergleich zu einer Umgebungstemperatur größer wird, da mit abnehmender Bauteilsteifigkeit die Walkarbeit und damit ein Energieeintrag in das elastisch verformbare Bauteilmaterial größer wird.

Im Verfahren wird ein solcher vorbestimmter Betriebszustand jeweils von einer Mess- und Auswerteeinheit der Einrichtung zur Bestimmung der Bauteilnutzungsdauer bzw. Bauteil-Restnutzungsdauer erkannt und dann nach Feststellung eines solchen Betriebszustands ein Messvorgang durch ein Startsignal selbsttätig gestartet. Mit wenigstens einem dem Bauteil zugeordneten Temperatursensor wird dann der aktuelle Temperaturanstieg im Vergleich zur Umgebungstemperatur als Kenngröße für eine aktuelle Bauteilsteifigkeit gemessen und aufeinanderfolgende, gemessene Kenngrößen werden jeweils in einer Messkurve gespeichert.

Wesentlich ist, dass die am Bauteil im vorgegebenen Betriebszustand betriebsmäßig erhöhte Betriebstemperatur erst in einem ausgeglichenen Temperaturzustand, das heißt bei einer konstantbleibenden Betriebstemperatur gemessen und für die Speicherung in der Messkurze erfasst wird. Der vorbestimmte Betriebszustand muss damit solange andauern, bis ein ausgeglichener, gleicher Temperaturzustand erreicht ist, bei dem eine etwa gleiche betriebsmäßige durch die periodische Verformung bedingte Wärmeaufnahme und etwa gleiche Wärmeabgabe an die Umgebung erfolgt. Dieser Zustand kann beispielsweise durch die Erfassung eines Temperaturtransienten mit der Mess- und Auswerteeinheit festgestellt werden, wenn der Temperaturtransient gegen Null geht. Alternativ oder zudem kann eine Betriebstemperaturmessung am Bauteil nach einem gestarteten Messvorgang erst nach einer an der Mess- und Auswerteeinheit vorgebbaren Wartezeit bei gleichbleibend andauerndem Betriebszustand durchgeführt werden. Solch eine Wartezeit ist so zu wählen, dass nach Ablauf dieser Wartezeit ein ausgeglichener Temperaturzustand erwartet werden kann.

Als Kenngrößen-Messwert wird für eine einfache und regelmäßig ausreichende Bestimmung einer Bauteil-Restnutzungsdauer ein Differenz-Temperaturwert zwischen der gemessenen betriebsmäßig erhöhten Betriebstemperatur am Bauteil in einem ausgeglichenen Temperaturzustand, und einer in einer Bauteilnähe gemessenen Umgebungstemperatur verwendet.

Im Verfahren wird in einer Vergleichereinheit der Mess- und Auswerteeinheit ein Vergleich eines aktuellen Kenngrößen-Messwerts bezüglich vorhergehender gespeicherter Kenngrößen-Messwerte durchgeführt, wobei folgende Ergebnisse möglich sind und ausgewertet werden: Die über eine relativ lange Nutzungsdauer gespeicherten Kenngrößen-Messwerte als Kenngrößen für die Bauteilsteifigkeit sind etwa gleich und die aus den Kenngrößen-Messwerten gebildeten Messkurve bildet einen Plateaubereich mit im Verlauf dieser Nutzungsdauer geringem Neigungsanstieg entsprechend einer weitgehend gleichbleibenden Bauteilsteifigkeit. Damit ist eine weitere sichere Bauteilfunktion festgestellt.

Alternativ werden über eine gegenüber der Nutzungsdauer des Plateaubereichs kurzen Nutzungsdauer nacheinander erfasste Kenngrößen-Messwerte sukzessiv und progressiv größer, so dass der Plateaubereich entsprechend einer progressiven Abnahme der Bauteilsteifigkeit verlassen ist.

Dadurch wird der Beginn einer verschleißbedingten zeitlich vorgebbaren Bauteil-Restnutzungsdauer festgestellt. Zudem wird eine entsprechende Warnfunktion optisch und/oder akustisch ausgegeben, insbesondere beim Erreichen eines als Schwellwert vorgegebenen Steigungsanstiegs der Messkurve für die Kenngrößen-Messwerte.

Ein zu Beginn einer Bauteilnutzung erfasster, relativ kurzer ansteigender oder abfallender Bereich der Messkurve entsprechend einem Fließ- und/oder Setzvorgang im elastisch verformbaren Material wird bei der Auswertung für den Beginn einer Restnutzungsdauer nicht herangezogen und ausgeblendet.

Kern der Erfindung ist somit eine mittels Temperaturmessung qualitative Bestimmung der Steifigkeit des verformbaren Bauteils im verbauten Zustand, welche in einem solchen verbauten Zustand regelmäßig nicht unmittelbar und absolut messbar ist. Nur in Kenntnis einer gemessenen Kraft und gemessenen Verformung, wie beispielsweise auf einem Prüfstand lässt sich die Steifigkeit mit Absolut-Werten messtechnisch bestimmen. In einer technischen Anwendung ist es mit vertretbarem Aufwand nicht möglich, die an einem verbauten Bauteil anliegende Kraft meist absolut beziffert zu messen. Betriebsmäßig bedingte Temperaturveränderungen am Bauteil sind dagegen relativ einfach in an sich bekannter Weise mittels Temperatursensoren zu messen. Die Bestimmung der Bauteillebensdauer wird erfindungsgemäß vorteilhaft nur durch einfach durchzuführende Auswertungen von Temperaturmesswertveränderungen bei gleichen, erfassten Betriebsbedingungen und bei ausgeglichenen Temperaturen durchgeführt, die einer relativen Veränderung der Bauteilsteifigkeit zugeordnet werden.

Zu unterschiedlichen Zeitpunkten, jeweils wenn im Verfahren der vorbestimmte, sich zeitversetzt wiederholende, jeweils gleiche Betriebszustand mit der Mess- und Auswerteeinheit erfasst und festgestellt wird, wird jeweils ein Messvorgang ausgelöst. Ein solcher Betriebszustand wird vorzugsweise dergestalt vorbestimmt, dass dabei jeweils gleiche, periodisch wirkende Verformungskräfte und Lastniveaus zeitlich so lange auftreten, dass sie mit zu deutlichen Verformungen und entsprechendem Walkanteil zu einem deutlich messbare Temperaturanstieg im Vergleich zu einer gemessenen Umgebungstemperatur führen.

Für die Bestimmung einer Bauteilnutzungsdauer, insbesondere einer Feststellung des Beginns einer verschleißbedingten Bauteil-Restnutzungsdauer wird die gewonnene Erkenntnis genutzt, dass (ähnlich einer Prüfstands-Verformungsmessung) der relative Temperaturanstieg im Vergleich zu einer Umgebungstemperatur einen zeitlich lang andauernden Plateaubereich einer Messkurve aufweist, der ein Kriterium für eine funktionssichere Nutzung des elastisch verformbaren Bauteils ist, an den sich ein vergleichsweise schnell und progressiv größer werdender Messkurvenbereich anschließt, der einen Hinweis auf den Beginn eines sich abzeichnenden Bauteilschadens mit einer noch zur Verfügung stehenden Bauteil-Restnutzungsdauer gibt.

Zur verfahrensmäßigen Erstellung einer Messkurve werden zweckmäßig auf der X-Achse eines Diagramms die aufeinanderfolgende Anzahl der Messwerte aufgetragen, die als Nutzungsdauer interpretierbar sind. Auf der Y-Achse werden die Kenngrößen-Messwerte entsprechend einem aktuell gemessenen Temperaturanstieg bezüglich einer Umgebungstemperatur aufgetragen. Optisch verständlicher ist jedoch der Kehrwert 1 geteilt durch die Kenngrößen-Messwerte, womit eine Messkurve analog zum Verlauf der Bauteilsteifigkeit erhalten wird. Damit zeigt sich in einer ersten Stufe zu Beginn der Bauteilnutzungsdauer ein starker Steifigkeitsabfall durch Fließen und Setzen, dem sich in einer zweiten Stufe ein Plateaubereich mit leicht linear abfallender Steifigkeit über die Lebensdauer anschließt, dem sich in einer dritten Stufe ein stark progressiver Abfall anschließt, der das beginnende Ende der Nutzungsdauer markiert. Für die Auswertung wird als Messkurve eine Gerade ermittelt, die das beschriebene Plateau in ihrem Verlauf gut abbildet, wobei dies bereits nach wenigen Messwerten im Plateaubereich möglich ist. Jeder weitere Messwert wird dahingehend bewertet, wie er die Charakteristik der davorliegenden Geraden verändert und davon abweicht. Vorzugsweise wird für eine Auswertung eine Veränderung der Steigung dieser Gerarde als Kriterium herangezogen. Nimmt nach dem Plateaubereich der Betrag der Steigung über mehrere Messvorgänge deutlich über den Wert der Streuung zu, so beginnt der Bereich des progressiven Steifigkeitsabfalls als Signal zum Austausch des Bauteils. Im Prinzip wird somit das Differenzial der ermittelten Messkurve ausgewertet.

Mit dem erfindungsgemäßen Verfahren wird somit vorteilhaft der Verschleißzustand eines verformbaren Bauteils während seiner Bauteilnutzungsdauer unmittelbar am Bauteil und direkt ohne Kenntnis einer absolut beziffert gemessenen Kraft und Verformung festgestellt. Dabei wird vorteilhaft durch die Verwendung eines betriebsbedingten Temperaturanstiegs im Gegensatz zur Verwertung von Verformungswerten die betriebsbedingte Bauteilbelastung in allmöglichen Freiheitsgraden erfasst und ausgewertet, da alle Zwangsbewegungen in allen Freiheitsgraden zu einem Energieeintrag und einem verhältnismäßig gemittelten Temperaturanstieg beitragen.

Erfindungsgemäß kann ein elastisch verformbares Bauteil über seine tatsächliche Lebensdauer bis zum Beginn seines progressiven Steifigkeitsabfalls genutzt werden. Insbesondere können damit durch Nutzungsdauerabschätzungen, die aus Prüfstandsmessungen an Musterbauteilen resultieren, vorgegebene, präventive Austauschmaßnahmen vor einem tatsächlich möglichen Nutzungsende entfallen, wodurch Wartungs- und Betriebskosten eingespart werden. Zudem ist die Bauteilsicherheit durch die Messung unmittelbar und an jedem verbauten Bauteil erhöht und das Risiko eventueller Folgekosten bei einem nicht bekannten Bauteilausfall ist reduziert.

Als Kenngrößen-Messwert kann für eine einfache und regelmäßig ausreichende Bestimmung einer Bauteil-Restnutzungsdauer ein Differenz-Temperaturwert zwischen der gemessenen betriebsmäßig erhöhten Betriebstemperatur am Bauteil, vorzugsweise in einem ausgeglichenen Temperaturzustand, und einer in einer Bauteilnähe gemessenen Umgebungstemperatur verwendet werden.

Stark unterschiedliche Umgebungstemperaturen können zu ungünstig großen Toleranzen bei den ermittelten Kenngrößen-Messwerten führen. Es wird daher in einer weiteren Ausgestaltung des Verfahrens vorgeschlagen, dass der Start eines Messvorgangs und/oder die Verwertung eines Kenngrößenmesswerts für eine Messkurve der Mess- und Auswerteeinheit nur freigegeben wird, wenn die aktuell gemessene Umgebungstemperatur in einem vorgegebenen Temperaturfenster, insbesondere in einem Temperaturbereich von 0° bis 35°C liegt und/oder dass Kenngrößenmesswerte mit Korrekturwerten korrigiert werden, die aus aktuell gemessenen Umgebungstemperaturwerten abgeleitet sind. Solche Korrekturwerte können beispielsweise am Einbauort experimentell ermittelt werden.

Wenn beim Vorliegen von betriebsmäßigen Startbedingungen für einen Messvorgang jedoch die Umgebungstemperaturbedingungen und gegebenenfalls weitere Randbedingungen zur Freigabe der Messung nicht vorliegen, wird dennoch ein Messwertzähler für die Messkurve hochgesetzt, um den Messkurvenverlauf hinsichtlich eines Steifigkeitsverlaufs nicht zu verzerren.

Ab dem Beginn des progressiven Messkurvenverlaufs entsprechend einem progressiven Steifigkeitsabfall kann regelmäßig eine sichere Weiterbenutzungsdauer als Restlebensdauer des Bauteils von 5% bis 15%, bevorzugt von 10%, der bisher erfassten Bauteilnutzungsdauer angenommen werden. Diese Information kann zusätzlich zum Signal für den erforderlichen Austausch des Bauteils gegeben werden.

Bei jedem erfassten Auftreten eines vorbestimmten Betriebszustands kann mit dem Verfahren jeweils ein einziger Messvorgang gestartet und durchgeführt werden. Alternativ und/oder zusätzlich kann bei einem langen Anhalten eines solchen Betriebszustands auch nach einem vorbestimmten Wartezeitabstand jeweils selbsttätig ein weiterer Messvorgang gestartet und durchgeführt werden.

Für sichere und genaue Messungen können der Temperatursensor oder die Temperatursensoren der Temperatursensorik zumindest teilweise in das verformbare Bauteil integriert, vorzugsweise in das verformbare Bauteilmaterial eingebettet sein und/oder unmittelbar an angrenzenden Anbauteilen angeordnet sein.

Zweckmäßig werden die Mess- und Auswerteeinheit mit ihren Komponenten in eine meist ohnehin geräteseitig vorhandene Zentralelektronik voll- oder teilintegriert, wobei an einer Mess- und Auswerteeinheit gegebenenfalls Temperatursensoren mehrerer verbauter Bauteile zur Messung und Auswertung angeschlossen sein können, wodurch der Überwachungsaufwand für mehrere Bauteile erheblich reduzierbar ist.

Anhand einer Zeichnung wird die Erfindung weiter erläutert.

Es zeigen:
- Figur 1: ein Ablaufdiagramm für die erfindungsgemäße Bestimmung des Beginns einer verschleißbedingten Restnutzungsdauer, und
- Figur 2: ein typisches Diagramm einer Messkurve.

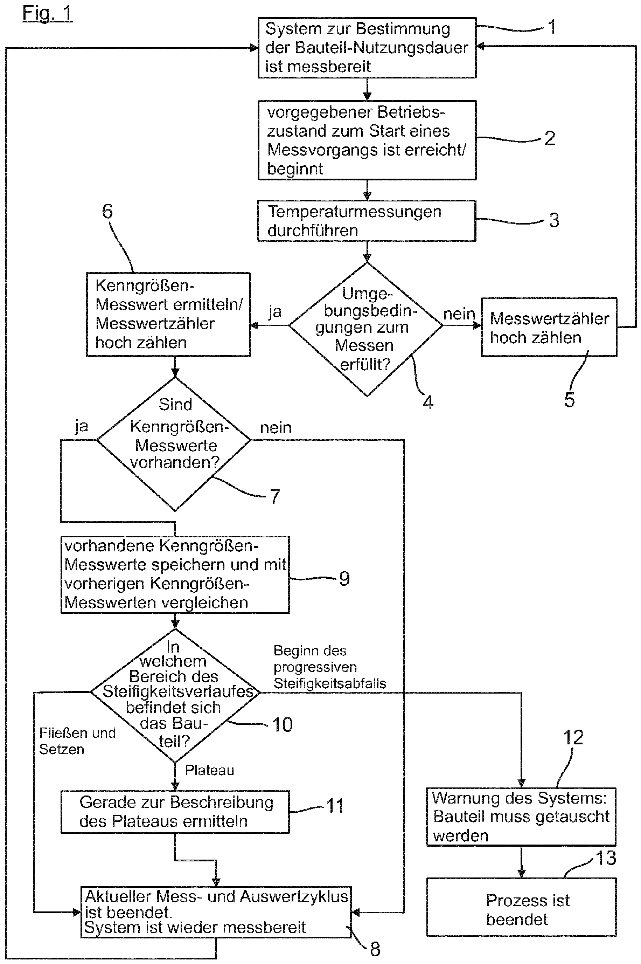

In Figur 1 ist die Prozessabfolge des Verfahrens anhand von Status-Prozessrechtecken und Entscheidungsrauten dargestellt:
Gemäß dem ersten Rechteck 1 ist das System zur Bestimmung der Bauteilnutzungsdauer messbereit. Als Bauteil wird hier beispielhaft ein Gummi-Metall-Lager in einem verbauten Zustand im Rotorbereich einer Windkraftanlage angenommen. Dabei soll auf das Gummi-Metall-Lager entsprechend einer Rotordrehung eine periodisch wirkende Verformungskraft auf das betrachtete Gummi-Metall-Lager wirken.

Gemäß der beiden nachfolgenden Rechtecke 2 und 3 wird ein vorgegebener Betriebszustand zum Start eines Messvorgangs erreicht und durch das System festgestellt, worauf der Befehl zur Durchführung von Temperaturmessungen gegebenen wird. Im angenommenen Beispiel einer Windkraftanlage wurde beispielsweise als sich zeitversetzt wiederholender, jeweils gleicher Betriebszustand vorbestimmt, wenn Windstärke 3 vorliegt und die Rotorgondel in den Wind gedreht wurde. Zudem wird mit der Messung so lange gewartet, bis ein ausgeglichener Temperaturzustand vorliegt, bei dem sich die Bauteiltemperatur aktuell nicht mehr ändert. Weiter wird die Umgebungstemperatur erfasst.

Bei anderen Anwendungen kann ein Triggersignal für einen Messstart bei einem Einsatz des Gummi-Metall-Lagers im Bahnbetrieb (Lokomotive/Waggon) beispielsweise durch Erreichen eines Messabschnitts mittels eines Positionssignals ausgegeben werden. Bei einer Verwendung in der Luftfahrt kann als Triggersignal der Beginn eines Flugmanövers verwendet werden. Beim Einsatz in Schiffen kann das Triggersignal zum Beispiel bei Erreichen einer vorgegebenen Motorleistung abgegeben werden.

In der Entscheidungsraute 4 wird zudem überprüft, ob gegebenenfalls zusätzliche Umgebungsbedingungen, insbesondere ein vorgegebenes Temperaturfenster bei der Messung erfüllt sind.

Sind vorgegebenen Umgebungsbedingungen/Randbedingungen für eine Messung nicht erfüllt, wird lediglich der Messwertzähler ohne eine Messwertspeicherung hochgezählt, um Verzerrungen der Messwertkurve zu reduzieren (Rechteck 5).

Sind die Umgebungsbedingungen/Randbedingungen zum Messen erfüllt, wird ein Kenngrößen-Messwert ermittelt und der Messwertzähler hochgezählt (Rechteck 6).

In der folgenden Entscheidungsraute 7 wird festgestellt, ob Kenngrößenwerte vorliegen. Ist dies nicht der Fall, wird der aktuelle Mess- und Auswertezyklus beendet.

Sind Kenngrößenmesswerte vorhanden, werden diese gespeichert und mit vorhergehend gespeicherten Kenngrößenmesswerten verglichen (Rechteck 9).

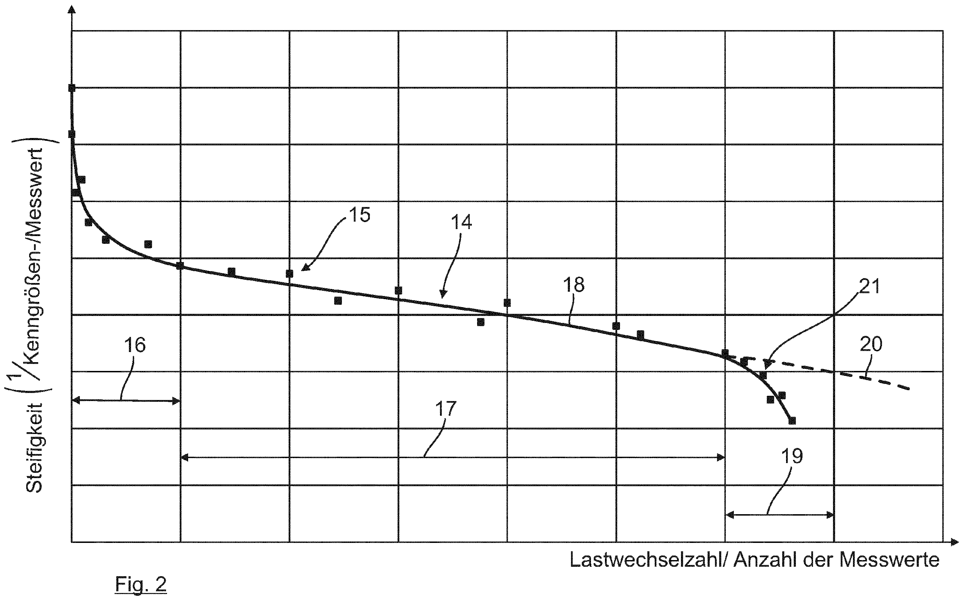

Anschließend wird dieser Vergleich ausgewertet (Entscheidungsraute 10) und festgestellt, in welchem Bereich des Steifigkeitsverlaufs sich das Bauteil befindet. Ein typischer Steifigkeitsverlauf ist nachfolgend anhand des Diagramms der Figur 2 dargestellt und wird in Verbindung mit dem Ablaufdiagramm nach Figur 1 erläutert:
Wenn in der Auswertung (Entscheidungsraute 10) der erste Bereich 16 mit relativ schnell abfallender Steifigkeit zum Nutzungsbeginn, der durch Fließen und Setzen des Elastomermaterials hervorgerufen wird, festgestellt wird, ist dies kein Hinweis auf den Beginn eines baldigen Nutzungsendes, so dass der aktuelle Mess- und Auswertezyklus beendet wird (Rechteck 8).

Wird ein Steifigkeitsverlauf dergestalt ermittelt, dass der zweite Bereich 17 als Plateaubereich durch die aktuelle Messung im Vergleich zu vorhergehenden Messungen weitergeführt ist, wird die Gerade zur Beschreibung des Plateaubereichs weitergeführt (Rechteck 11). Auch dies ist kein Hinweis auf den Beginn des Nutzungsendes, so dass auch für diesen Fall der aktuelle Mess- und Auswertezyklus beendet wird (Rechteck 8).

Wird dagegen anschließend an den Plateaubereich 17 im dritten Bereich 19 des Steifigkeitsverlaufs ein progressiver Steifigkeitsabfall bei der Auswertung festgestellt, gibt das System eine Warnung aus, dass das überwachte Bauteil ausgetauscht werden muss (Rechteck 12). Mit dieser Warnung bezüglich des überwachten Bauteils wird der Prozess beendet (Rechteck 13).

Im Diagramm der Figur 2 ist beispielhaft eine typische Messkurve 14 für eine zeitliche Bauteilnutzung eines elastisch verformbaren Bauteils, hier beispielhaft eine Gummi-Metall-Lagers bei zeitlich versetzt über eine Zeit bis zu einem Temperaturausgleich periodisch auftretenden Belastungen dargestellt.

Dazu ist nach oben auf der X-Achse die jeweils qualitativ ermittelte Steifigkeit (aus die Zahl 1 geteilt durch den jeweiligen Kenngrößenmesswert) aufgetragen. Auf der X-Achse des Diagramms ist die Anzahl der Messwerte aufgetragen, die als Nutzungsdauer interpretierbar ist. Beispielsweise ist hier jeweils ein Betriebszustand einer Windkraftanlage bei Windstärke 3 betrachtet, wobei für jeden solchen erfassten Betriebszustand ein dazu vorhandener Messwert im Diagramm als Messpunkt 15 eingezeichnet ist.

Durch nicht genau exakt erfassbare Betriebsbedingungen und Messtoleranzen bei den Temperaturmessungen streuen zwar die Messpunkte 15, jedoch in nur geringem und für die zu treffende qualitative Aussage bezügliche der Nutzungsdauer nur im unbedeutenden Umfang. Bei der Auswertung wird daher eine Interpolation vorgenommen mit folgendem Ergebnis:
Im ersten Steifigkeitsbereich 16 fällt die Bauteilsteifigkeit durch Fließen und Setzen relativ schnell ab. Im zweiten Steifigkeitsbereich 17, der durch eine Gerade 18 durch Ausmittelung der Messwertstreuung angegeben werden kann, ist ein Plateaubereich durch einen nur sehr geringen Steifigkeitsabfall gekennzeichnet. Im Diagramm ist dieser Steifigkeitsbereich zur besseren Verdeutlichung mit einer relativ großen Neigung der Geraden 18 dargestellt. Tatsächlich ist der zweite Steifigkeitsbereich 17 als Plateaubereich im Vergleich zum ersten und dritten Steifigkeitsbereich 16, 19 wesentlich größer/länger mit vielen Messwerten 15, beispielsweise 10 Jahre. Zur besseren Verdeutlichung des prinzipiellen Verlauf der Messkurve ist der Plateaubereich in Figur 2 jedoch verkürzt dargestellt. Anschließend an den Plateaubereich 17 wird im dritten Steifigkeitsbereich 19 ein schneller progressiver Steifigkeitsabfall festgestellt als Hinweis für einen bald erforderlichen Austausch des Bauteils entsprechend dem Rechteck 12 aus Figur 1. Dieser progressive Steifigkeitsabfall als deutliche Abweichung von der Verlängerung 20 der Geraden 18 ist bereits kurz nach seinem Beginn (beispielsweise mit Messwert 21) schnell und einfach feststellbar.

## Patentansprüche

1. Verfahren zur Bestimmung des Beginns einer verschleißbedingten Restnutzungsdauer eines elastisch verformbaren Bauteils als Strukturteil und/oder Lagerteil eines Geräts, wobei auf das elastisch verformbare Bauteil im Betriebsverlauf von wechselnden Betriebszuständen abhängige, unterschiedliche Verformungskräfte einwirken, die zu einem die Bauteilnutzungsdauer begrenzenden Bauteilverschleiß führen, und das Gerät mit einer Einrichtung zur Bestimmung der Bauteilnutzungsdauer, insbesondere zur Feststellung des Beginns einer verschleißbedingten Bauteil-Restnutzungsdauer ausgerüstet ist, wobei
ein sich zeitversetzt wiederholender, jeweils gleicher Betriebszustand vorbestimmt wird, dem eine jeweils gleiche, periodisch wirkende Verformungskraft zugeordnet ist, durch die das elastisch verformbare Bauteilmaterial periodisch verformt wird, wobei durch Walkarbeit ein Energieeintrag mit einem messbaren Temperaturanstieg im Vergleich zu einer Umgebungstemperatur erfolgt und wobei der jeweilige Temperaturanstieg als Kenngröße im Verlauf einer Bauteilnutzungsdauer entsprechend einer abnehmenden Bauteilsteifigkeit größer wird,
ein solcher vorbestimmter Betriebszustand jeweils von einer Mess- und Auswerteeinheit der Einrichtung zur Bestimmung der Bauteilnutzungsdauer erkannt wird und nach Feststellung eines solchen vorbestimmten Betriebszustands ein Messvorgang durch ein Startsignal selbsttätig gestartet wird, wobei mit wenigstens einem bauteilzugeordneten Temperatursensor, der aktuelle Temperaturanstieg im Vergleich zur Umgebungstemperatur als Kenngröße für eine aktuelle Bauteilsteifigkeit gemessen wird, und wobei die am Bauteil im vorgegebenen Betriebszustand betriebsmäßig erhöhte Betriebstemperatur nach dem gestarteten Messvorgang erst bei einer festgestellten konstanten Betriebstemperatur gemessen wird, und dazu mit der Mess- und Auswerteeinheit ein vorliegender Temperaturtransient erfasst und die Betriebstemperaturmessung erst ausgeführt wird, wenn der Temperaturtransient am Bauteil in einem ausgeglichen Temperaturzustand mit etwa gleicher betriebsmäßiger Wärmeaufnahme und Wärmeabgabe an die Umgebung gegen Null geht und/oder dass nach gestartetem Messvorgang eine an der Mess- und Auswerteeinheit vorgebbare Wartezeit bei gleichzeitig vorliegender Belastungsdauer bis zur Betriebstemperaturmessung gewartet wird, nach der ein ausgeglichener Temperaturzustand mit gleichbleibender Temperatur erreicht worden ist,
aufeinanderfolgende, gemessene Kenngrößen jeweils in einer Messkurve gespeichert werden,
mit einer Vergleichereinheit der Mess- und Auswerteeinheit ein Vergleich eines aktuellen Kenngröße-Messwerts bezüglich vorhergehender, gespeicherter Kenngröße-Messwerte durchgeführt wird (9) mit dem Ergebnis,
dass die über eine relativ lange Nutzungsdauer gespeicherten Kenngrößen-Messwerte als Kenngrößen für die Bauteilsteifigkeit etwa gleich sind und die aus den Kenngrößen-Messwerten gebildete Messkurve (14) einen Plateaubereich (17) mit im Verlauf dieser Nutzungsdauer geringem Neigungsanstieg entsprechend einer weitgehend gleichbleibenden Bauteilsteifigkeit bildet, womit eine weitere sichere Bauteilfunktion festgestellt ist, oder
dass alternativ über eine gegenüber der Nutzungsdauer des Plateaubereichs (17) kurzen Nutzungsdauer nacheinander erfasste Kenngrößen-Messwerte (21) sukzessiv und progressiv größer werden, so dass der Plateaubereich (17) entsprechend einer progressiven Abnahme der Bauteilsteifigkeit verlassen ist (19), wodurch der Beginn einer verschleißbedingen, zeitlich vorgebbaren Bauteil-Restnutzungsdauer festgestellt und eine entsprechende Warninformation (12), insbesondere beim Erreichen eines als Schwellwert vorgegebenen Steigungsanstiegs der Messkurve für die Kenngrößen-Messwerte, ausgegeben wird.

2. Verfahren nach Anspruch 1, **dadurch gekennzeichnet, dass** ein zu Beginn einer Bauteilnutzung erfasster ansteigender oder abfallender Bereich (16) der Messkurve (14), bei der Auswertung für den Beginn einer Restnutzungsdauer nicht herangezogen wird.

3. Verfahren nach Anspruch 1 oder 2, **dadurch gekennzeichnet, dass** als Kenngrößen-Messwert ein in der Mess- und Auswerteeinheit bezeichneter Differenz-Temperaturwert zwischen der gemessenen betriebsmäßig erhöhten Betriebstemperatur am Bauteil in einem ausgeglichenen Temperaturzustand, und einer in einer, jedoch von der erhöhten Betriebstemperatur am Bauteil nicht mehr beeinflussten Bauteilnähe gemessenen Umgebungstemperatur verwendet wird.

4. Verfahren nach einem der Ansprüche 1 bis 3, **dadurch gekennzeichnet, dass** der Start eines Messvorgangs und/oder die Verwertung eines Kenngrößen-Messwerts für eine Messkurve (14) nur freigegeben wird, wenn die aktuell gemessene Umgebungstemperatur in einem vorgebbaren Temperaturfenster, insbesondere in einem Temperaturbereich von 0°C bis 35°C liegt, und/oder
dass Kenngrößen-Messwerte mit Korrekturwerten korrigiert werden, die aus aktuell gemessenen Umgebungstemperaturwerten abgeleitet sind.

5. Verfahren nach Anspruch 4, **dadurch gekennzeichnet, dass** beim Vorliegen von betriebsmäßigen Startbedingungen für einen Messvorgang, jedoch die Umgebungstemperaturbedingen und gegebenenfalls weitere Randbedingungen zur Freigabe nicht vorliegen, wird dennoch ein Messwertzähler für die Messkurve (14) hochgesetzt.

6. Verfahren nach einem der Ansprüche 1 bis 5, **dadurch gekennzeichnet, dass** die bisherige Bauteilnutzungsdauer bis zur Abgabe einer Warninformation erfasst wird und mit der Warninformation eine Information zur möglichen unkritischen Weiterbenutzung bis zu einem zwingend erforderlichen Bauteilaustausch mit einer Weiterbenutzungsdauer als Restlebensdauer, gegeben wird.

7. Verfahren nach einem der Ansprüche 1 bis 6, **dadurch gekennzeichnet, dass** für den Fall, dass nach dem Start und der Durchführung eines Messvorgangs der für den Start erfasste Betriebszustand für eine vorbestimmte, relativ lange Zeitdauer anhält, wird nach einem vorbestimmten Wartezeitabstand jeweils selbsttätig ein weiterer Messvorgang gestartet und durchgeführt, ansonsten wird jeweils beim Auftreten eines solchen Betriebszustands ein einziger Messvorgang gestartet und durchgeführt.

8. Verfahren nach einem der Ansprüche 1 bis 7, **dadurch gekennzeichnet, dass** die Temperatursensor oder die Temperatursensoren zumindest teilweise in das verformbare Bauteil integriert, vorzugsweise in das verformbare Bauteilmaterial eingebettet sind und/oder unmittelbar an angrenzenden Anbauteilen angeordnet sind.

9. Verfahren nach einem der Ansprüche 1 bis 8, **dadurch gekennzeichnet, dass** die Mess- und Auswerteeinheit mit ihren Komponenten in eine geräteseitige Zentralelektronik voll- oder teilintegriert ist und dort gegebenenfalls Temperatursensoren mehrerer Bauteile zur Messung und Auswertung ausgeschlossen sind.

## Claims

1. Method for determining the beginning of a wear-related remaining service life of an elastically deformable component as a structural part and/or bearing part of a device, wherein various deformation forces which lead to component wear limiting the component service life and are dependent on changing operating states act on the elastically deformable component in the course of operation, and the device is equipped with a means for determining the component service life, in particular for establishing the beginning of a wear-related remaining component service life, wherein
an operating state which recurs at time intervals and is the same each time is predetermined and is assigned a periodically acting deformation force which is the same each time and by which the elastically deformable component material is periodically deformed, wherein an energy input with a measurable temperature increase in comparison with an ambient temperature takes place due to flexing work and wherein the respective temperature increase as a characteristic variable becomes greater in the course of a component service life in a way corresponding to a decreasing component stiffness,
such a predetermined operating state is in each case detected by a measuring and evaluation unit of the means for determining the component service life and, after establishing such a predetermined operating state, a measuring operation is automatically started by a starting signal, wherein the temperature increase at the particular time is measured by at least one component-assigned temperature sensor in comparison with the ambient temperature as a characteristic variable for a component stiffness at the particular time, and wherein the operationally increased operating temperature at the component in the preset operating state is only measured after the started measuring operation when there is an established constant operating temperature, and for this purpose an existing temperature transient is sensed by the measuring and evaluation unit and the operating temperature measurement is only carried out when the temperature transient at the component in a balanced temperature state with approximately the same operational heat absorption and heat dissipation to the surroundings tends towards zero and/or that, after a started measuring operation, a waiting time which can be preset at the measuring and evaluation unit is allowed to pass, along with at the same time an existing loading time period up to the operating temperature measurement, after which a balanced temperature state with a constant temperature has been reached,
successive, measured characteristic variables are in each case stored in a measuring curve,
with a comparator unit of the measuring and evaluation unit, a comparison with a characteristic-variable measured value at a particular time with respect to previous, stored characteristic-variable measured values is carried out (9), with the result
that the characteristic-variable measured values stored over a relatively long service life as characteristic variables for the component stiffness are approximately the same and the measuring curve (14) formed from the characteristic-variable measured values forms a plateau region (17) with a small increase in slope in the course of this service life, in a way corresponding to a largely constant component stiffness, whereby a further safe component function is established, or
that alternatively, over a service life which is short in comparison with the service life of the plateau region (17), characteristic-variable measured values (21) sensed one after the other become successively and progressively greater, so that the plateau region (17) is left in a way corresponding to a progressive decrease in the component stiffness (19), whereby the beginning of a wear-related remaining component service life of a time which can be preset is established and corresponding warning information (12) is output, in particular when an increase in slope of the measuring curve for the characteristic-variable measured values which is preset as a threshold value is reached.

2. Method according to Claim 1, **characterized in that** a rising or falling region (16) of the measuring curve (14) which is sensed at the beginning of component service is not used in the evaluation for the beginning of a remaining service life.

3. Method according to Claim 1 or 2, **characterized in that** a differential temperature value, designated in the measuring and evaluation unit, between the measured operationally increased operating temperature at the component in a balanced temperature state and an ambient temperature which is measured in a proximity of the component that is however no longer influenced by the increased operating temperature at the component is used as the characteristic-variable measured value.

4. Method according to one of Claims 1 to 3, **characterized in that** the start of a measuring operation and/or the utilization of a characteristic-variable measured value for a measuring curve (14) is only authorized if the ambient temperature measured at a particular time lies in a presettable temperature window, in particular in a temperature range from 0°C to 35°C, and/or
**in that** characteristic-variable measured values are corrected with correction values which are derived from ambient temperature values measured at particular times.

5. Method according to Claim 4, **characterized in that**, when operational starting conditions for a measuring operation exist, but the ambient temperature conditions and possibly further constraints for authorization do not exist, a measured value counter for the measuring curve (14) is nevertheless incremented.

6. Method according to one of Claims 1 to 5, **characterized in that** the previous component service life up to the issuing of warning information is sensed and, with the warning information, information is provided concerning possible uncritical further service up until a necessarily required component exchange with a further service life as the remaining lifetime.

7. Method according to one of Claims 1 to 6, **characterized in that**, for the case where the operating state sensed for starting lasts for a predetermined, relatively long time period after starting and carrying out a measuring operation, after a predetermined waiting time interval a further measuring operation is in each case automatically started and carried out, otherwise a single measuring operation is started and carried out each time such an operating state occurs.

8. Method according to one of Claims 1 to 7, **characterized in that** the temperature sensor or the temperature sensors are at least partially integrated in the deformable component, preferably are embedded in the deformable component material, and/or are arranged directly on adjacent add-on parts.

9. Method according to one of Claims 1 to 8, **characterized in that** the measuring and evaluation unit is fully or partly integrated with its component parts in central electronics of the device and possibly temperature sensors of a number of components for measuring and evaluation are excluded there.

## Revendications

1. Procédé de détermination du début d'une vie utile résiduelle en fonction de l'usure d'un composant à déformation élastique comme une pièce structurelle et/ou une pièce de support d'un appareil, dans lequel différentes forces de déformation, dépendantes d'états de fonctionnement variables, agissent sur le composant à déformation élastique en cours de fonctionnement et entraînent une usure du composant limitant la vie utile du composant, et l'appareil est équipé d'un dispositif pour déterminer la vie utile du composant, en particulier pour constater le début d'une vie utile résiduelle du composant en fonction de l'usure, dans lequel
un état de fonctionnement respectivement identique qui se répète avec un décalage dans le temps est prédéterminé et se voit attribuer une force de déformation respectivement identique, agissant périodiquement, par laquelle le matériau du composant à déformation élastique est déformé périodiquement, dans lequel un foulage produit un apport énergétique avec une augmentation de la température mesurable en comparaison avec une température ambiante, et l'augmentation de la température respective augmente en tant que grandeur caractéristique au cours d'une vie utile du composant selon une rigidité décroissante du composant,
un tel état de fonctionnement prédéterminé est reconnu respectivement par une unité de mesure et d'évaluation du dispositif pour déterminer la vie utile du composant, et une fois un tel état de fonctionnement prédéterminé constaté, une opération de mesure est lancée automatiquement par un signal de démarrage, dans lequel au moins un capteur de température associé au composant mesure l'augmentation actuelle de la température en comparaison avec la température ambiante en tant que grandeur caractéristique pour une rigidité actuelle du composant, et dans lequel la température de fonctionnement augmentée selon le fonctionnement à l'état de fonctionnement spécifié au niveau du composant après le lancement de l'opération de mesure n'est mesurée que lorsqu'une température de fonctionnement constante est constatée, et l'unité de mesure et d'évaluation détecte à cet effet une transitoire de température présente, et la mesure de température de fonctionnement n'est effectuée que si la transitoire de température au niveau du composant, dans un état de température équilibré avec une absorption de chaleur et une dissipation de chaleur dans l'environnement selon le fonctionnement, tend vers zéro, et/ou qu'après le lancement de l'opération de mesure, on attend pendant un temps d'attente prédéfinissable au niveau de l'unité de mesure et d'évaluation avec une durée de sollicitation simultanée jusqu'à la mesure de température de fonctionnement après laquelle un état de température équilibré avec une température constante a été atteint,
des grandeurs caractéristiques mesurées, successives, sont stockées respectivement dans une courbe de mesure,
une unité de comparaison de l'unité de mesure et d'évaluation effectuant (9) une comparaison d'une valeur mesurée de grandeur caractéristique actuelle par rapport à des valeurs mesurées de grandeurs caractéristiques stockées, précédentes, avec le résultat
que les valeurs mesurées de grandeurs caractéristiques stockées pendant une vie utile relativement longue sont pratiquement identiques en tant que grandeurs caractéristiques pour la rigidité du composant, et la courbe de mesure constituée par les valeurs mesurées de grandeurs caractéristiques (14) forme une zone de plateau (17) avec une faible augmentation de l'inclinaison au cours de cette vie utile selon une rigidité du composant largement constante, permettant d'établir une autre fonction fiable du composant, ou
qu'en variante, des valeurs mesurées de grandeurs caractéristiques (21) détectées les unes après les autres augmentent successivement et progressivement pendant une vie utile courte par rapport à la vie utile de la zone de plateau (17), de sorte que l'on quitte (19) la zone de plateau (17) selon une diminution progressive de la rigidité du composant, ce qui permet de constater le début d'une vie utile résiduelle du composant en fonction de l'usure et pouvant être prédéfinie dans le temps, et d'émettre une information d'avertissement correspondante (12), en particulier lorsqu'une augmentation de la pente de la courbe de mesure, prédéfinie en tant que valeur seuil, est atteinte pour les valeurs mesurées de grandeurs caractéristiques.

2. Procédé selon la revendication 1, **caractérisé en ce qu'**une zone (16) montante ou descendante de la courbe de mesure (14), détectée au début d'une utilisation du composant n'est pas prise en compte lors de l'évaluation pour le début d'une vie utile résiduelle.

3. Procédé selon la revendication 1 ou 2, **caractérisé en ce qu'**une valeur de température différentielle, désignée dans l'unité de mesure et d'évaluation, entre la température de fonctionnement mesurée, augmentée selon le fonctionnement, au niveau du composant dans un état de température équilibré, et une température ambiante mesurée à proximité du composant mais sans être influencée par la température de fonctionnement augmentée, est utilisée comme valeur mesurée de grandeur caractéristique.

4. Procédé selon l'une quelconque des revendications 1 à 3, **caractérisé en ce que** le lancement d'une opération de mesure et/ou l'utilisation d'une valeur mesurée de grandeur caractéristique pour une courbe de mesure (14) n'est autorisée que si la température ambiante mesurée actuellement se situe dans une fenêtre de température prédéfinissable, en particulier dans une plage de températures de 0 °C à 35 °C, et/ou
**en ce que** des valeurs mesurées de grandeurs caractéristiques sont corrigées par des valeurs de correction dérivées de valeurs de température ambiante mesurées actuellement.

5. Procédé selon la revendication 4, **caractérisé en ce qu'**en présence de conditions de démarrage selon le fonctionnement pour une opération de mesure, mais en l'absence des conditions de température ambiante et d'autres conditions secondaires supplémentaires, le cas échéant, un compteur de valeurs mesurées est malgré tout incrémenté pour la courbe de mesure (14).

6. Procédé selon l'une quelconque des revendications 1 à 5, **caractérisé en ce que** la vie utile précédente du composant jusqu'à l'émission d'une information d'avertissement est détectée, et avec l'information d'avertissement, une information concernant la possibilité d'une utilisation continue sans problème jusqu'à un remplacement indispensable du composant est fournie avec une durée d'utilisation continue comme vie utile résiduelle.

7. Procédé selon l'une quelconque des revendications 1 à 6, **caractérisé en ce qu'**au cas où après le lancement et l'exécution d'une opération de mesure, l'état de fonctionnement détecté pour le démarrage perdure pendant une durée de temps prédéterminée, relativement longue, après un intervalle de temps d'attente prédéterminé, respectivement une opération de mesure supplémentaire est lancée et exécutée automatiquement, sinon respectivement lors de l'apparition d'un tel état de fonctionnement, une seule opération de mesure individuelle est lancée et exécutée.

8. Procédé selon l'une quelconque des revendications 1 à 7, **caractérisé en ce que** le capteur de température ou les capteurs de température est/sont au moins partiellement intégré(s) dans le composant déformable, de préférence incorporé(s) dans le matériau de composant déformable et/ou disposé(s) directement sur des pièces rapportées adjacentes.

9. Procédé selon l'une quelconque des revendications 1 à 8, **caractérisé en ce que** l'unité de mesure et d'évaluation avec ses composants est intégrée complètement ou partiellement dans une électronique centrale côté appareil et que des capteurs de température de plusieurs composants qui s'y trouvent le cas échéant sont exclus de la mesure et de l'évaluation.
